(19) **Europäisches Patentamt**
**European Patent Office**
**Office européen des brevets**

(11) **EP 2 398 852 B1**

(12) **EUROPEAN PATENT SPECIFICATION**

(45) Date of publication and mention
of the grant of the patent:
**30.10.2013 Bulletin 2013/44**

(51) Int Cl.:
**C08K 3/00** (2006.01)     **C08K 7/14** (2006.01)
**C08K 7/04** (2006.01)

(21) Application number: **10703896.0**

(22) Date of filing: **16.02.2010**

(86) International application number:
**PCT/EP2010/051905**

(87) International publication number:
**WO 2010/094676 (26.08.2010 Gazette 2010/34)**

(54) **IMPROVED FIBER REINFORCED POLYESTER COMPOSITION**

VERBESSERTE FASERVERSTÄRKTE POLYESTERZUSAMMENSETZUNG

COMPOSITION DE POLYESTER AMÉLIORÉE RENFORCÉE PAR FIBRES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.02.2009 EP 09153317**

(43) Date of publication of application:
**28.12.2011 Bulletin 2011/52**

(73) Proprietor: **DSM IP Assets B.V.**
**6411 TE Heerlen (NL)**

(72) Inventors:
• **SCHELLEKENS, Ronald Michaël Alexander Maria**
  **NL-6241 DN Bunde (NL)**
• **LEEMANS, Luc Elza Florent**
  **B-3720 Kortessem (BE)**
• **STOLK, Jan**
  **NL-6135 HJ Sittard (NL)**

(74) Representative: **Dorrestijn, Antoon**
**DSM Intellectual Property**
**P.O. Box 4**
**6100 AA Echt (NL)**

(56) References cited:
**EP-A1- 1 860 155     EP-B- 1 005 502**
**US-A- 4 163 002     US-A- 4 178 277**

• **N.G.MALTSEVA, E.M. AIZENSHTEIN: "THE MOLECULAR WEIGHT DISTRIBUTION OF THE POLYETHYLENE TERPHTHALATE AS A FACTOR IN THE PROPERTIES OF LAVSAN FIBRE" FIBRE CHEMISTRY, vol. 6, no. 1, February 1974 (1974-02), pages 49-51, XP002533711**
• **RONALD W. NUNES, JOHN R. MARTIN, JULIAN F. JOHNSON: "Influence of molecular weight and molecular weight distribution on mechanical properties of polymers" POLYMER ENGINEERING AND SCIENCE, vol. 22, no. 4, 31 March 1982 (1982-03-31), pages 205-228, XP002581232 DOI: 10.1002/pen.760220402**

**Description**

The present invention relates to a fiber reinforced polyester composition, the production thereof, and use of the composition in moulded articles.

It is well known that the incorporation of fibers, such as glass fibers, into polyester resin is able to improve the mechanical properties, such as tensile strength. It is also well known that the mechanical properties of fiber reinforced polyesters are enhanced with an increase in the molecular weight of the polyester.

A problem encountered with formulating fiber reinforced polyester compositions is that ability to incorporate fibers into the polyester resin limits the molecular weight of the polyester due to the high viscosities associated increased molecular weights.

This problem has been overcome by increasing the molecular weight of the polyester after the addition of the fibers. US 5, 869, 561 discloses the use of chain extenders to increase the molecule weight of glass fiber polyester during melt mixing, thus improving the composition's mechanical properties. US 4, 163, 002 teaches the use of solid state post condensation (SSPC) to increase the molecular weight of the polyester in filler fortified polyalkyleneterephthalate molding compositions leading to improved impact strength and mechanical aging characteristics.

Commercial products such as glass fiber reinforced polyethylene terephthalate (PET), such as Amite® AV2 370/B available from DSM, Geleen, the Netherlands have been successfully developed on the basis of this SSPC technology.

Despite these improvements, there is still the need of fiber reinforced polyester compositions with further improved mechanical properties and/or improved processability to enable greater design flexibility.

The solution has been provided in the present invention.

In one embodiment of the present invention there is provided a process for the production of a solid state post condensated fiber reinforced polymer composition, preferably suitable for a brake booster, comprising the steps of:

i) compounding a polymer composition comprising:

A) polyethylene terephthalate (PET) and/or polybutylene terephthalate (PBT) with a Mz/Mw < 6.0, with a relative solution viscosity (RSV) of the PET of less than 1.70 (determined according to ISO 1628-5 by diluting 1 gram of polymer in 125 grams of solvent at 25°C, the solvent consisting of 7.2 parts by weight 2,4,6  trichlorophenol and 10 parts by weight phenol) and with a relative viscosity of the PBT of less than 1.9 (determined according to ISO 1628-5 by diluting 1 gram of polymer in 100 grams metacresol at 25°C).
(B) glass fibers; and

ii) heating the compounded polymer composition obtained in step i) under solid phase condensation conditions, thereby increasing the RSV of the PET to at least 1.70 and the RSV of the PBT to at least 1.90, while the increase in the ratio of z-average molecular mass to weight average molecular mass (Mz/Mw) of the solid state postcondensated PET and/or PBT is less than 100% of the ratio of the PET and/or PBT used for step i).

With the PET and/or PBT used for step i) is understood the polymer as it is prior to the compounding step. During the compounding step the RSV might decrease somewhat and the molecular weight distributions also might be influenced.

The polymer composition preferably comprises, relative to the total weight of the polymer composition, 40 to 95 wt% polymeric constituents; and 5 to 60 wt% reinforcing fibers. Polymer constituents are PET and/or PBT and eventually further polymers.

It has been surprising found that, compared to conventional solid state post condensated fiber reinforced polymer compositions comprising PET and/or PBT, a reduced relative solution viscosity (i.e. better flow) in combination with a narrow molecular weight distribution (i.e. Mz/Mw < 6.0) of the composition, results in maintained or improved mechanical properties, such as notched tensile strength.

The polymer composition obtained by the process of the present invention provide enhanced design freedoms over conventional polymer compositions, with thinner and lighter weight components being able to be produced with the same mechanical properties. Alternatively, or in addition to; the improved mechanical properties of the polymer compositions may be used to develop new applications for its use.

Also disclosed but no part of the invention is a fiber reinforced thermoplastic polymer composition, preferably suitable for a brake booster, comprising, relative to the total weight of the composition:

(A) 40 to 95wt% of PET and/or PBT and eventually further polymeric constituents; and
(B) 5 to 60 wt% reinforcing fibers,

wherein the PET and the PBT have a ratio of z-average molecular mass to weight average molecular mass (Mz/Mw) of less than 6.0, the PET has relative solution viscosity (RSV) of at least 1.70 (determined at 25°C by diluting 1 gram of polymer in 125 grams of solvent, the solvent consisting 7.2 parts by weight 2,4,6 trichlorophenol to 10 parts by weight phenol) and the PBT has a relative viscosity of less than 1.9 (determined by diluting 1 gram of polymer in 100 grams metacresol at 25°C)

Components (A) and (B) preferably represent at least 80 wt%, more preferably at least 90 wt% and most preferably at least 99.5 wt% of the total polymer composition.

Reinforcing fiber

The reinforcing fiber is a glass fiber.

The reinforcing fiber as defined within the scope of the present invention is non-reactive. A reinforcing fiber is non-reactive when, under SSPC conditions (step (iii)) the fiber does not or react or does hardly react with the PET and/or PBT, such that the Mz/Mw ratio is substantially the same (i.e. not substantially increased) as the Mz/Mw of the PET and/or PBT used for step i). An amount which is not substantially the same will be a quantity understood by those skilled in the art dependent upon the specific polymer and processing conditions in question and the amount of increase in the Mz/Mw ratio observed in the corresponding non-reinforced polyester under SSPC reaction condition. A Mz/Mw ratio is generally considered not substantially increased when the % increase in the Mz/Mw ratio of the product of step(ii) to the Mz/Mw ratio of the polymer used for step(i) is less than 100%, preferably less than 50% and even more preferably less than 30% and most preferably less than 15%. E.g. if (Mz/Mw) -step (ii) is 3.0 and (Mz/Mw) -step(i) is 2.0, then the % increase is 50%.

The differences in fiber properties (e.g. glass or ceramic fibers) are thought to relate to the properties of the coating applied to the fiber. For convenience, the term "reinforced fiber" and "glass fiber" are used interchangeably, where appropriate.

Fiber coatings typically comprises:

- a film forming agent,
- a coupling agent;
- a lubricant; and
- other additives.

The coatings are commonly applied using a solvent, such as demineralised water, which is subsequently evaporated.

The film forming agent or binder is applied to keep the single glass fibers or filaments together in order to prevent abrasion and breakage during the production of the glass fibers. The film forming agent also provides compatibility with specific polymers. Emulsifiable film forming compounds generally used include polyvinylacetate, polyesters, expoxies, polyurethanes, polyacrylates and combinations thereof.

The coupling agents or keying agents enables the glass fiber reinforced polymer to exhibit high mechanical strength and wet strength retention. The bonding between the glass fibers and the polymer can be enhanced through the application of a coupling agent to the glass fiber. Most coupling agents are organosilane based compounds.

Due to the high coefficient of friction, a lubricant is generally added to the glass fiber coating to prevent abrasion between fibers which lead to increased fiber breakage. Other additives, such as anti-static agents, heat stabilizers, plasticizers, emulsifying agents, anti-foaming agents etc may also be included in the formulation.

While not wanting to be held by theory, it is thought that in certain glass fiber grades a component of the glass fiber coating is reactive under SSPC reaction conditions leading to a broadening in the molecular weight distribution, as indicated by an increase in the ratio of Mz to Mw. As the exact coating formulations used in glass fibers are typically propriety knowledge of the glass manufacturer's, and therefore not publicly available, knowing the specific components which can be attributed to the reactivity of the glass fibers is of little benefit in glass fiber selection. However, determining what constitutes a non-reactive glass may be conveniently performed through measuring the Mz/Mw of a number of polymer composition (comprising a polyester and different glass fibers) prior to and after SSPC in which the RSV has increased from below 1.70 to above 1.70 (e.g. 2.00) for PET and from below to above 1.9 for PBT and calculate the increase in Mz/Mw to categorize the fibers into non-reactive and reactive glass fibers, as is performed in the examples of the present invention.

Suitable glass fibres for use as reinforcing fiber in the polyester composition that is used in the process according to the invention generally have a fiber diameter of from 5 to 20 $\mu$m, preferably 8-15 $\mu$m, and most preferably 9-11 $\mu$m for optimal balance of mechanical properties, like stiffness, strength and toughness, and processability. Length of fibers is typically between 3 to 6 mm prior to compounding as is typically is reduced to less than 1 mm after the compounding step.

Fiber Reinforced polymer composition

*Reinforced fiber content*

Preferably, the polymer composition contains 20-50 wt% of reinforcing fibres, more preferably 30-45 wt% of reinforcing fibres, and even more preferably 33-38 wt% reinforcing fibres. The advantage hereof is a more balanced compromise between high strength and stiffness, a low relative density and easy processing behaviour of the polymer composition. In a special embodiment of the present invention, the polymer composition has an average reinforced fiber content of between 25 and 60 wt%, which average reinforced fiber content shows a standard deviation of not more than 0.6 % between different lots and between samples taken from one lot of polymer compositions, and thus also between different parts moulded from these compositions. Typical lot sizes as produced are from about 5000 to 25000 kg.

Preferably this standard deviation is not more than 0.5 %, more preferably not more than 0.4 %, and most preferably not more than 0.3 %. The inventors found that a process in which a polymer composition with such narrow distributions in the reinforced fibres content is used, a very good performance in dimensional tolerances of moulded articles, such as brake boosters obtained. In addition to enabling a constant and reproducible relative density of the composition and products moulded thereof, little variation in glass fibres content probably also results in little fluctuation in melt viscosity of the composition, and thus in a very stable injection moulding process, i.e. in little fluctuations in pressures, temperatures etc. This is not only advantageous for minimising degradation of the polymer composition during the moulding process, but also for controlling crystallinity, density, dimensions and residual stresses of the moulded part obtained.

*Relative Solution Viscosity*

RSV is used as an indicator to the balance between a moulded polymer composition's processability and mechanical properties. In general, a higher RSV will result in improved strength and toughness, whereas a lower RSV promotes melt flow and crystallisation speed of a composition. The mechanical properties of the polymer composition are also heavily dependant upon the interaction between the polymer constituents of the polymer composition and the reinforcing fibers. As such, it is desirable that the PET and/or PBT have a sufficiently low RSV to enable a uniform dispersion of reinforcing fibers in which there is sufficient polyester- glass fiber contact to ensure good bonding between the composite components which translates into good mechanical properties.

Generally the PET used for step i) has a relative solution viscosity (RSV, determined on a solution of 1 gram polymer in 125 grams of a 7.2/10 (wt/wt) trichlorophenol/phenol mixture at 25°C; based on the procedure described ISO 1628-5) of less than 2.00, more preferably less than from 1.80 and even more preferably less than 1.75. This range of RSV is required to ensure that the RSV of the PET after completion of the compounding step i) is less than 1.70, preferably less than 1.65, more preferably less than 1.60, even more preferably less than 1.55 and most preferably less than 1.50. A low RSV enables the compounding components to be more easily mixed, thereby promoting even distribution of components.

Generally the PBT used for step i) has a relative solution viscosity (RSV, determined on a solution of 1 gram polymer in 100 grams of metacresol at 25°C; based on the procedure described ISO 1628-5) of less than 2.20, more preferably less than from 2.00 and even more preferably less than 1.95. This range of RSV is required to ensure that the RSV of the PBT after completion of the compounding step i) is less than 1.90, preferably less than 1.85, more preferably less than 1.80, even more preferably less than 1.75 and most preferably less than 1.70. A low RSV enables the compounding components to be more easily mixed, thereby promoting even distribution of components.

The RSV of the PET and/or PBT is increased through solid state post condensation by, for example, exposing the compounded polymer composition in granular form to an elevated temperature of between about 10°C to 50°C below its melting point, in an inert atmosphere during several hours. Another advantage of such a solid state post-condensation is that any volatiles present in the composition, and that may affect processing behaviour of the composition or properties of a part moulded thereof, are substantially removed.

Solid state post condensation is performed until the RSV of the PET is at least 1.70, preferably greater than 1.75, more preferably greater than 1.80 and even more preferably at least 1.85. To enable the polyester composition to be readily possessed into shaped articles, the RSV is preferably less than 2.10, more preferably less than 1.90.

For PBT solid state post condensation is performed until the RSV of the PBT is at least 1.90, preferably greater than 1.95, more preferably greater than 2.00 and even more preferably at least 2.05. To enable the polyester composition to be readily possessed into shaped articles, the RSV is preferably less than 2.30, more preferably less than 2.10.

PET and/or PBT

Next to the polymeric constituents PET and/or PBT the polymer composition may comprise one or more further polymeric constituents for example in an amount of less than 30 wt% relative to the total weight of the polymer constituents. In this way it is possible to enhance functional properties, such as mechanical, electrical and/or fire retardant properties. Preferably, the polymer composition comprises at least 80 wt%, and even more preferably at least 95 wt%, and most preferably at least 98 wt% PET and/or PBT relative to the total weight of the polymer constituents. Preferably the polymer composition contains PET. Preferably, the polymer composition comprises at least 80 wt%, and even more preferably at least 95 wt%, and most preferably at least 98 wt% PET relative to the total weight of the polymer constituents. In a special embodiment the polymer composition contains only PET and/or PBT as polymer constituents, more preferably only PET.

Preferably at least 50 wt% of PET and/or PBT in the polyester composition is a homopolymer. The composition may further contain a PET copolymer that may contain more than 5 mole% of other monomers, like the type of polymer used for making bottles. Such polymers may be used as virgin grades, but also as recycled grades, that is material recovered from post-use products, e. g. soft-drink bottles.

As a nucleating agent in the polymer composition any known nucleating agents may be used. Preferably, an inorganic additive like micro-talcum, or a metal- carboxylate, especially an alkalimetal-carboxylate like sodium benzoate is  used. More preferably, an alkalimetal-carboxylate like sodium benzoate is used in an amount of from about 0.05 to 0.5 wt% (based on the total weight of polymer in the polyester composition).

The polymer composition may comprising small amounts (i.e less than 2 wt.%) of other additives, such as those known in the art (e.g. mould release agents and nucleating agents).

*Compounding*

In step i) of the process according to the invention any customary compounding process may be used. Suitably, the polymer composition is compounded by melt blending the various components in a melt-mixing device. Suitable melt mixing devices are, for example, extruders, especially twin-screw extruders, most preferably with co-rotating screws.

The polymeric constituents and other components may be first mixed as a dry blend and than fed to the melt mixing device. In an alternative method, the polymeric constituents are dosed to and molten in the melt mixing device, thereby forming a polymer melt and other additives are added the polymer melt. The advantage thereof is better control over the maximum temperature during compounding, and better dispersing of components into the polyester. Suitably, the reinforcing fiber is added after the polymer melt has been formed.

*Sold State Post Condensation*

The polymer composition obtained after compounding in step i) is subjected to heat-treatment, preferably at a temperature close to, but below the melting point of the polyester polymer (e.g. from about 50°C to 10°C below), and under reduced pressure or a flow of an inert gas. For embodiments in which the polyester is PET, the heat treatment preferably heats and maintains the polyester composition at a temperature between 160°C and 245°C, more preferably between 170°C and 240°C, depending upon the melting point of the polyester. The advantage of a higher temperature is that the time needed for obtaining the RSV is shorter.

In another preferred embodiment of the process according to the present invention the inert gas atmosphere has a pressure of less than 10 kPa, more preferably less than 1 kPa, even more preferably less than 500 Pa. A lower pressure has the advantage that the required RSV is obtained in shorter time. This allows a  more efficient production process with a higher yield, without the need of extending the production installation.

The SSPC of the polymer composition according to the present invention may be carried out by any mode and in any apparatus suitable for that purpose. The process can suitably be carried out, for example, as a batch process (e.g. in a tumble dryer) or as a continuous process (e.g. in a moving bed reactor).

The SSPC polymer composition may then be processed into a shape object using processing techniques known in the art, such as injection moulding.

Unless otherwise stated, percentage % of a component is expressed as a weight % relative to the total weight of the total composition.

A thermoplastic polymer composition for the purposes of the present invention means a polyester composition which is or has the ability to be repeatedly melt processed, such that the material is considered to be recyclable in the same or other applications.

The invention also relates to a process for producing a moulded article containing the polymer composition. Preferably such article is an automotive, an electric or an electronic component. More preferably the automotive component is a fuel pump or a throttle valve body, most preferably a brake booster.

Examples

*Materials*

CE-A   PET with a RSV of 1.72 available from DSM Engineering Plastics B.V, The Netherlands, containing, relative to the total weight of the composition, 0.1 wt% nucleating agent: sodium benzoate E221, from Univar Benelux and 0.35 wt% Paracera C40, Camaubawax, a mould release agent from Paramelt B.V.

CE-B   CE-A which has undergone SSPC until a RSV of 2.35 has been reached.

CE-C   CE-A compounded with 35 wt.% glass fibers relative to the total weight of the PET composition.

CE-D   Arnite™ AV2 370 /B a commercial solid state post condensed PET containing 35 wt.% glass fibers (designed for use in PET compositions) relative to the total weight of the PET composition and having a RSV of 1.90.

E-1   CE-A compounded with 35 wt.% glass fibers relative to the total weight of the PET composition. The glass fibers are available from PPG under the trade name Chop Vantage® HP3540 (directed for use with polyamide).

E-2   CE-A compounded with 35 wt.% glass fibers relative to the total weight of the PET composition. The glass fibers are available from PPG under the trade name Chop Vantage® HP3420 (directed for use with Polyphenylene Sulfide).

*Analytical methods*

Relative solution viscosimetry

RSV was determined on a method based upon ISO 1628-5, using a PET compound which was dissolved in a mixture of 2, 4, 6 trichlorophenol and phenol at 135°C (1 g of polymer in 125 g solvent measured at 25°C). The mass ratio of the solvent mixture is 7.2 parts by weight of 2, 4, 6 trichlorophenol to 10 parts by weight of phenol.

Size exclusion chromatography

The molecular masses and molecular mass distributions of the PET compounds were determined with size exclusion chromatography.

A Hewlett Packard 1090M2 equipped with 3 PSS columns and RI, UV, DP and RALLS detectors was used. The elution solvent was hexafluoroisopropanol with added 0.1 m% potassium trifluoro acetate. Samples were filtered over a 0.2 $\mu$m filter before injection.

Notched tensile test

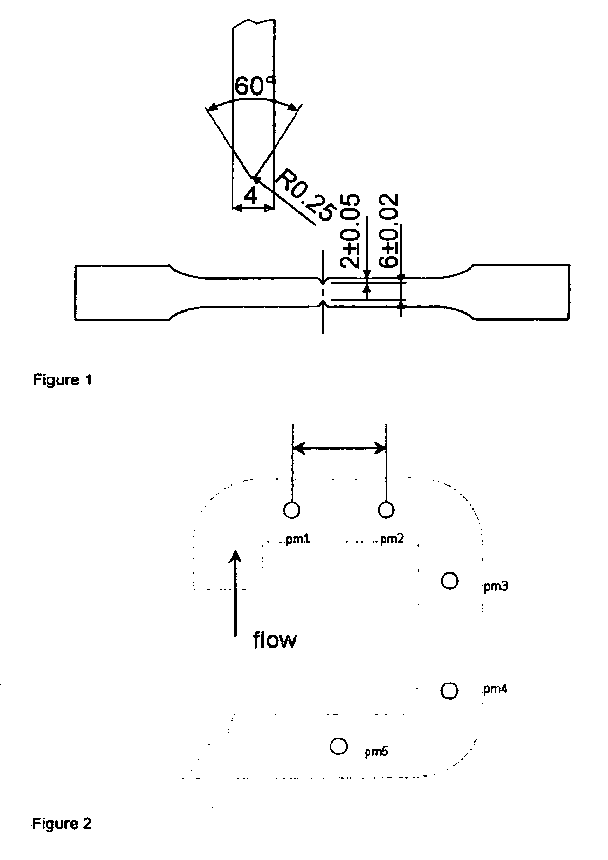

The notched tensile test is carried out on injection moulded ISO527 type 1A test bars. Counterfacing notches are machined halfway the narrow section of the test bar according to the drawing in Figure 1. The notches are 2 mm deep, meaning that the cross-section at the location of the notches is reduced from 10x4 mm to 6x4 mm. The notch radius is 0.25 mm. Testing of the tensile bars occurs in accordance with the ISO 527 standard. Tensile testing speed is 5 mm/min. During the test, force and displacement measurements are recorded. The force at break is directly used as a measure for the material's resistance to failure.

Instrumented spiral flow test

The spiral flow test was performed using an Engel 45B injection moulding machine with a 22 mm diameter screw. Spiral shaped (see Figure 2) products were produced (with a thickness (t) of 2 mm and width 15 mm) from pre-dried (10 hours at 120 °C under vacuum with nitrogen) granules. The temperature settings were 260-270 °C, and mould temperature 130 °C. An injection speed of 20 mm/s was applied. The flow behaviour ($\alpha$) was expressed in pressure (P) (measured at flow transducer PM-1) versus the ratio of flow length (L) to thickness (t) :

$$\alpha = P/(L/t)$$

Figure 2 is a representative schematic drawing of part of the product cavity of mould used in the spiral flow test. For melt front detection, a series of pressure transducers (PM-1 to PM-5) in the mould were used.

*Sample preparation*

Preparation of PET composition by compounding

The polymer compositions were prepared on a ZE 40 A UTX twin-screw extruder from Berstorff. Barrel temperature was set at 260- 280 °C, screw speed was 300 RPM and yield was 180 kg/hour. Components such as PET, nucleating agent and mould release agent were dosed to the hopper as a pre-blend, and glass fibers were introduced via a side-feeder into the polymer melt. Extruded strands were cooled in water and granulated.

SSPC of the PET compositions

Comparative example CE-B was made as follows:
Heat treatment of the polymer compositions was performed on a Rotavapor R151 from Büchi. A 10 L glass flask was charged with 2 kg PET granules and vented with pure, dry nitrogen. Then, the pressure was reduced to 100 Pa and the rotating flask was heated in an oil bath. The temperature of the granules was raised to between 215°C and 235°C. The granules were maintained at these conditions for between about 10 and 25 hours until a target RSV of 1.90 had been reached.
After this period, the oil bath was taken away and the granules cooled to room temperature, after which the RSV was measured.
Comparative example CE-D and examples E-1, and E-2 were made as follows:
Heat treatment of the polymer composition was performed in a tumble-drier 100 litre unit. The drier was charged with 45 kg PET granules and  pressure was reduced to 80 mbar, vented with pure, dry nitrogen and temperature raised initially to 120 °C. After 1 hour at 120 °C pressure was reduced to 400 Pa and temperature was raised to 135 °C. After 1 hour temperature of the granules was raised to 205 °C, while pressure was kept at 4 mbar and vented with nitrogen. The granules were maintained at these conditions for between about 4 and 20 hours until a target RSV had been reached. After this period, the samples were cooled down to room temperature, after which the RSV was measured.

Preparation of test bars by injection moulding

Tensile test bars according to the ISO 527 standard were injection moulded from pre-dried (10 hours at 120 °C under vacuum with nitrogen flow) granules on an Engel 80 E injection moulding machine, with temperature settings 260-270 °C, and mould temperature of 140 °C.

Results

*The effect of compounding and SSPC*

The effects of compounding and SSPC on the molecular weight distribution (Mn, Mw and Mz) were assessed, with the results complied in Table 1. Compounding the non-reinforced and uncompounded PET (comparative experiment A (CE-A)) with glass fiber to produce (CE-C) resulted in a decrease in RSV (1.72 to 1.52) and a broadening of the molecular weight distribution as characterized by an increase in the Mw/Mn and Mz/Mw. This effect is partly attributed to the some degradation of the polymer (↓RSV) during compounding and a reaction with the glass fiber (↑Mz/Mw). As heat treatment of the fiber reinforced PET (CE-C) was effected broadening of the molecular weight distribution continued until the SSPC was halted when the RSV had reached 1.90 (Mw/Mn = 5.7, Mz/Mw = 11.2) (CE-D). In contrast, the heat treatment of CE-A leads to an increase of RSV to 2.35 (CE-B), and a Mz/Mw value which remained substantially the same. It could be therefore concluded that the glass fibers used in CE-C reacted with the PET during the compounding and SSPC steps, as evidenced in CE-D.

*The effect of the type of glass fiber*

Two glass fibers (Examples 1 & 2 (E-1 & E-2)) were compounded with PET and subjected to SSPC until the RSV viscosity had reached about 1.90. The  results indicated that the Mz/Mw had increased by less than 30% (i.e. substantially the same).

**Table 1**

| Sample | RSV | Mn | Mw | Mz | Mw/Mn | Mz/Mw |
|--------|------|----|-----|------|-------|-------|
| CE-A | 1.72 | 22 | 42 | 67 | 1.9 | 1.6 |
| CE-B | 2.35 | 43 | 94 | 164 | 2.2 | 1.8 |
| CE-C | 1.52 | 13 | 34 | 141 | 2.6 | 4.1 |
| CE-D | 1.90 | 20 | 113 | 1258 | 5.7 | 11.2 |
| E-1 | 1.88 | 29 | 58 | 111 | 2.0 | 1.9 |
| E-2 | 1.90 | 29 | 59 | 118 | 2.1 | 2.0 |

*Functional performance*

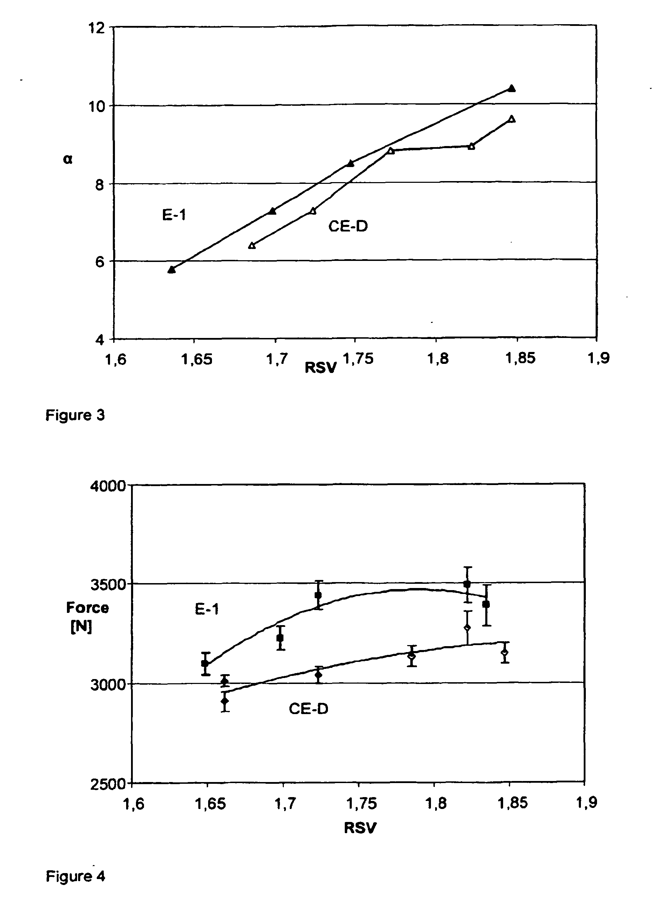

The glass fiber reinforced PET composition in which the molecular weight distribution, as characterized by Mz/Mw remained substantially the same results in a slight deterioration in flow properties (Figure 3), but with a proportionally higher improvement in the force at break (Figure 4). The net effect is that an improvement, compared to conventional formulations, in both mechanical and flow properties can be simultaneously achieved. These results are surprising, particularly given that the glass fiber grade currently used in CE-D is specifically directed for use in PET and PBT resins, while the HP3540 grade of glass fiber is directed for use in polyamide resins.

The improved combination of flow and mechanical properties has been found to be particularly advantageous for automotive applications, such as brake boosters as determined through improvements in the force at break in the notched tensile test. Preferably, the polymer composition has a force at break, measure using the notched tensile test, of more than 3200 N, more preferably more than 3250 N, even more preferably more than 3300 N and most preferably more than 3350 N. Other suitable automotive applications include throttle valve bodies and fuel pumps. The combination of good mechanical and flow properties also makes the composition suitable for electronic or electrical applications.

**Claims**

1. A process for the production of a solid state post condensated fiber reinforced polymer composition comprising the steps of:

    i) compounding polymer composition comprising:

    (A) polyethylene terephthalate (PET) and/or polybutylene terephthalate (PBT) with a Mz/Mw < 6.0 (determined with size exclusion chromatography as indicated in the description), relative solution viscosity (RVS) of PET of less than 1.70 (determined according to ISO 1628-5 by diluting 1 gram of polymer in 125 grams of solvent at 25 °C, the solvent consisting of 7.2 parts by weight 2,4,6 trichlorophenol and 10 parts by weight phenol), and relative viscosity for PBT of less than 1.90, (determined according to ISO 1628-5 by diluting 1 gram of PBT in 100 gr metacresol at 25 °C).
    (B) glass fibers; and

    ii) heating the compounded polymer composition obtained in step i) under solid state post condensation conditions, thereby increasing the RSV of the PET to at least 1.70 and the RSV of the PBT to at least 1.90, while the increase in the ratio of z-average molecular mass to weight average molecular mass (Mz/Mw) of the solid state postcondensated PET and/or PBT is less than 100% of the ratio of the PET and/or PBT used for step i).

2. A process according to claim 1, wherein the increase in Mz/Mw of the PET and/or PBT as used in step i) is less than 50% after step ii).

3. A process according to claim 1, wherein the increase in Mz/Mw of the PET and/or PBT as used in step i) is less than 30% after step ii).

4. A process according to any of claims 1-3, wherein the composition contains PET.

5. A moulded article obtained from a composition obtained with the process according to any one of the proceeding claims, wherein the moulded article is a brake booster.


**Patentansprüche**

1. Verfahren zur Herstellung einer in fester Phase nachkondensierten faserverstärkten Polymerzusammensetzung, bei dem man:

    i) eine Polymerzusammensetzung, umfassend:

    (A) Polyethylenterephthalat (PET) und/oder Polybutylenterephthalat (PBT) mit Mz/Mw < 6, 0 (bestimmt durch Größenausschlusschromatographie, wie in der Beschreibung angegeben), einer relativen Lösungsviskosität (RSV) von PET von weniger als 1, 70 (bestimmt gemäß ISO 1628-5 durch Verdünnen von 1 Gramm Polymer in 125 Gramm Lösungsmittel bei 25°C, wobei das Lösungsmittel aus 7, 2 Gewichtsteilen 2, 4, 6-Trichlorphenol und 10 Gewichtsteilen Phenol besteht) und einer relativen Lösungsviskosität für PBT von weniger als 1, 90 (bestimmt gemäß ISO 1628-5 durch Verdünnen von 1 Gramm PBT in 100 g meta-Kresol bei 25°C)
    (B) Glasfasern

    compoundiert und
    (ii) die in Schritt i) erhaltene compoundierte Polymerzusammensetzung unter Festphasennachkondensationsbedingungen erhitzt, wodurch die RSV des PET auf mindestens 1,70 und die RSV des PBT auf mindestens 1,90 erhöht wird, während die Erhöhung des Verhältnisses der z-mittleren Molmasse zur gewichtsmittleren Molmasse (Mz/Mw) des in fester Phase nachkondensierten PET und/oder PBT weniger als 100% des Verhältnisses des für Schritt (i) verwendeten PET und/oder PBT beträgt.

2. Verfahren nach Anspruch 1, bei dem die Erhöhung von $M_z/M_w$ des in Schritt (i) verwendeten PET und/oder PBT nach Schritt ii) weniger als 50% beträgt.

3. Verfahren nach Anspruch 1, bei dem die Erhöhung von $M_z/M_w$ des in Schritt (i) verwendeten PET und/oder PBT nach Schritt ii) weniger als 30% beträgt.

4. Verfahren nach einem der Ansprüche 1-3, bei dem die Zusammensetzung PET enthält.

5. Formkörper, erhalten aus einer mit dem Verfahren nach einem der vorhergehenden Ansprüche erhaltenen Zusammensetzung, wobei es sich bei dem Formkörper um einen Bremskraftverstärker handelt.


**Revendications**

1. Procédé de fabrication d'une composition polymère renforcée par des fibres ayant subi une post-condensation en phase solide, consistant à :

    i) compounder une composition polymère comprenant :

    (A) du téréphtalate de polyéthylène (PET) et/ou du téréphtalate de polybutylène (PBT) ayant un rapport Mz/Mw < 6, 0 (déterminé par chromatographie d'exclusion diffusion comme il est indiqué dans la description), une viscosité relative en solution (VRS), pour le PET, inférieure à 1, 70 (déterminée selon ISO 1628-5 en diluant 1 g de polymère dans 125 g de solvant à 25 °C, le solvant consistant en 7, 2 parties pondérales de 2, 4, 6-trichlorophénol et 10 parties pondérales de phénol) et une viscosité relative en solution, pour le PBT, inférieure à 1, 90 (déterminée selon ISO 1628-5 en diluant 1 g de PBT dans 100 g de métacrésol à 25 °C) ;
    (B) des fibres de verre ; et

    ii) chauffer la composition polymère compoundée obtenue à l'étape i) dans des conditions de post-condensation en phase solide, en augmentant ainsi la VRS du PET jusqu'au moins 1,70 et la VRS du PBT jusqu'au moins 1,90, l'augmentation du rapport de la masse moléculaire moyenne en z contre la masse moléculaire moyenne en poids (Mz/Mw) du PET et/ou du PBT ayant subi une post-condensation en phase solide étant inférieure à 100 % du rapport du PET et/ou du PBT utilisé(s) pour l'étape i).

2. Procédé selon la revendication 1, dans lequel l'augmentation du rapport Mz/Mw du PET et/ou du PBT tels qu'utilisé(s) dans l'étape i) est inférieure à 50 % après l'étape ii).

3. Procédé selon la revendication 1, dans lequel l'augmentation du rapport Mz/Mw du PET et/ou du PBT tels qu'utilisé(s) dans l'étape i) est inférieure à 30 % après l'étape ii).

4. Procédé selon l'une quelconque des revendications 1 à 3, dans lequel la composition contient du PET.

5. Article moulé obtenu à partir d'une composition obtenue avec le procédé selon l'une quelconque des revendications précédentes, l'article moulé étant un servofrein.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5869561 A

- US 4163002 A